# EUROPÄISCHE PATENTANMELDUNG

(11) **EP 1 093 981 A2**
(43) Veröffentlichungstag der Anmeldung: **25.04.2001**
(21) Anmeldenummer: 00119395.2
(22) Anmeldetag: 12.09.2000
(51) Int. Cl.: B60R 22/26

(54) **Sicherheitsgurt für ein Kraftfahrzeug**

(30) Priorität: 21.10.1999 DE 19950772
(71) Anmelder: Volkswagen Aktiengesellschaft, 38436 Wolfsburg (DE)
(72) Erfinder: Möker, Carsten Dipl.-Ing., 38471 Rühen (DE); Ritters, Ernst-Wilhelm Dr. Dipl.-Phys., 38108 Braunschweig (DE)

(57) **Zusammenfassung**

Sicherheitsgurt für ein Kraftfahrzeug umfassend einen Beckengurt (7) und einen Beckengurtautomaten (2), in dem der Beckengurt (7) auf eine Aufwickelwelle (15) aufgewickelt werden kann, wobei der Sicherheitsgurt eine Gurtbandführung (10) aufweist, die derart zwischen der Aufwickelwelle (15) und dem Beckengurt (7) angeordnet ist, daß sie in einem Crashfall im wesentlichen in Fahrzeuglängsrichtung verschiebbar ist.

## Beschreibung

Die vorliegende Erfindung betrifft einen Sicherheitsgurt für ein Kraftfahrzeug, insbesondere einen Sicherheitsgurt umfassend einen Beckengurt und einen Beckengurtautomaten, in dem der Beckengurt auf eine Aufwickelwelle aufgewickelt werden kann.

Ein Sicherheitsgurt der vorgenannten Art findet in der Regel bei sogenannten Doppelretraktorsystemen Verwendung, in denen ein Gurtautomat beispielsweise in der B-Säule eines Kraftfahrzeuges und ein Gurtautomat beispielsweise am Sitz oder am Rohbau im Beckenbereich verschraubt sind. Als nachteilig bei derartigen Beckengurtautomaten erweist sich, daß in einem Crashfall aufgrund der Insassenkinematik eine Änderung des Winkels auftreten kann, unter dem das Gurtband aus dem Beckengurtautomat herausgeführt wird. Hierbei kann es passieren, daß das Gurtband gegen eine fixe Kante beispielsweise des Gehäuses des Beckengurtautomaten anlaufen kann, wodurch unter Umständen eine Beschädigung des Gurtbandes auftreten kann.

Das der vorliegenden Erfindung zugrundeliegende Problem ist die Schaffung eines Sicherheitsgurtes der eingangs genannten Art, bei dem eine Beschädigung des Gurtbandes im Crashfall weitgehend vermieden werden kann.

Dies wird erfindungsgemäß dadurch erreicht, daß der Sicherheitsgurt eine Gurtbandführung aufweist, die derart zwischen der Aufwickelwelle und dem Beckengurt angeordnet ist, daß sie in einem Crashfall im wesentlichen in Fahrzeuglängsrichtung verschiebbar ist. Aufgrund einer derartigen Gurtbandführung kann bei einer im Crashfall auftretenden Winkeländerung verhindert werden, daß das Gurtband gegen eine fixe Kante beispielsweise des Gehäuses des Beckengurtautomaten anläuft. Vielmehr wird die Gurtbandführung im Crashfall sich derart in Fahrzeuglängsrichtung nach vorne bewegen, daß keine oder nur eine unwesentlich einseitige Belastung des Gurtbandes auftritt, so daß dieser im Crashfall weitgehend unbeschädigt bleibt. Gleichzeitig wird sich in einem Crashfall das Gurtband aufgrund der längsverschieblichen Gurtbandführung in Kraftrichtung ausrichten, so daß eine gute Krafteinleitung gewährleistet ist.

Gemäß einer bevorzugten Ausführungsform der vorliegenden Erfindung umfaßt der Beckengurtautomat ein Gehäuse, an dem die Gurtbandführung angebracht ist. Dazu kann das Gehäuse auf der dem Beckengurt zugewandten Seite einen im wesentlichen in Fahrzeuglängsrichtung verlaufenden Schlitz aufweisen, in dem die Gurtbandführung gehaltert ist. Auf diese Weise wird mit einfachen Mitteln die Verschieblichkeit der Gurtbandführung in Fahrzeuglängsrichtung verwirklicht.

Vorteilhafterweise weist die Gurtbandführung eine durchgehende schlitzförmige Öffnung auf, deren Querschnitt etwa dem des durch sie hindurchgeführten, den Beckengurt bildenden Gurtbandes entspricht. Auf diese Weise ergibt sich eine vergleichsweise einfache Ausgestaltung der Gurtbandführung.

Gemäß einer bevorzugten Ausführungsform der vorliegenden Erfindung sind die der Gurtbandführung zugewandten Seiten des die Gurtbandführung halternden Schlitzes des Gehäuses mit Führungsschienen versehen, die mit den ihnen zugewandten Seitenflächen der Gurtbandführung derart zusammenwirken, daß sich eine Längsverschieblichkeit der Gurtbandführung in dem Schlitz ergibt. Dazu können die Führungsschienen vorteilhafterweise konvexe Außenflächen aufweisen und die diesen zugewandten Seitenflächen der Gurtbandführung entsprechend konkav geformt sein. Hier könnten beispielsweise die konvexen Außenflächen durch Rohrhälften oder dergleichen gebildet sein.

Vorteilhafterweise umfaßt der Sicherheitsgurt geeignete Befestigungsmittel, die die Bewegung der Gurtbandführung in Fahrzeuglängsrichtung im Normalbetrieb des Kraftfahrzeugs verhindern, wobei diese Befestigungsmittel nur bei im Crashfall auftretenden entsprechend starken Beschleunigungskräften die Gurtbandführung freigeben. Durch derartige Befestigungsmittel kann also gewährleistet werden, daß der Beckengurtautomat im Normalbetrieb des Kraftfahrzeugs den gleichen Gurttragekomfort bietet wie aus dem Stand der Technik bekannte Systeme. Nur im Crashfall geben die Befestigungsmittel die Gurtbandführung frei, so daß diese durch eine Verschiebung in Fahrzeuglängsrichtung nach vorne die Gefahr der Beschädigung des Gurtbandes reduzieren kann.

Es besteht die Möglichkeit, daß die Bewegung der Gurtbandführung in Fahrzeuglängsrichtung gegen die Kraft eines beispielsweise als Druckfeder ausgeführten Federmittels erfolgt. Hierzu kann an der in Fahrtrichtung des Kraftfahrzeugs vorderen Seite der Gurtbandführung ein Kolben angebracht sein, der zwischen den Führungsschienen verschiebbar ist und auf seiner von der Gurtbandführung abgewandten Seite gegen das beispielsweise als Druckfeder ausgeführte Federmittel drückt. Es besteht die Möglichkeit, daß das Federmittel in einem in dem Schlitz des Gehäuses festgelegten Führungszylinder untergebracht ist, wobei der Kolben in diesen Führungszylinder hineinbewegbar ist. Durch eine derartige Ausgestaltung der Gurtbandführung wird gewährleistet, daß die Gurtbandführung in Abhängigkeit von den auf sie einwirkenden Beschleunigungskräften mehr oder weniger stark beziehungsweise mehr oder weniger schnell in Fahrzeuglängsrichtung bewegt wird. Weiterhin wird insbesondere durch das Zusammenwirken von Führungszylinder und Kolben gewährleistet, daß die auf die Gurtbandführung ausgeübte Federkraft in Fahrzeuglängsrichtung ausgerichtet ist.

Weitere Vorteile und Merkmale der vorliegenden Erfindung werden deutlich anhand der nachfolgenden Beschreibung bevorzugter Ausführungsbeispiele unter Bezugnahme auf die beiligenden Abbildungen. Darin zeigen
- Fig. 1: eine perspektivische Ansicht eines Fahrzeugsitzes mit einem erfindungsgemäßen Sicherheitsgurt;
- Fig. 2: eine teilweise geschnittene Draufsicht auf einen Beckengurtautomaten eines erfindungsgemäßen Sicherheitsgurtes;
- Fig. 3: eine Schnittansicht gemäß den Pfeilen III-III in Fig. 2.

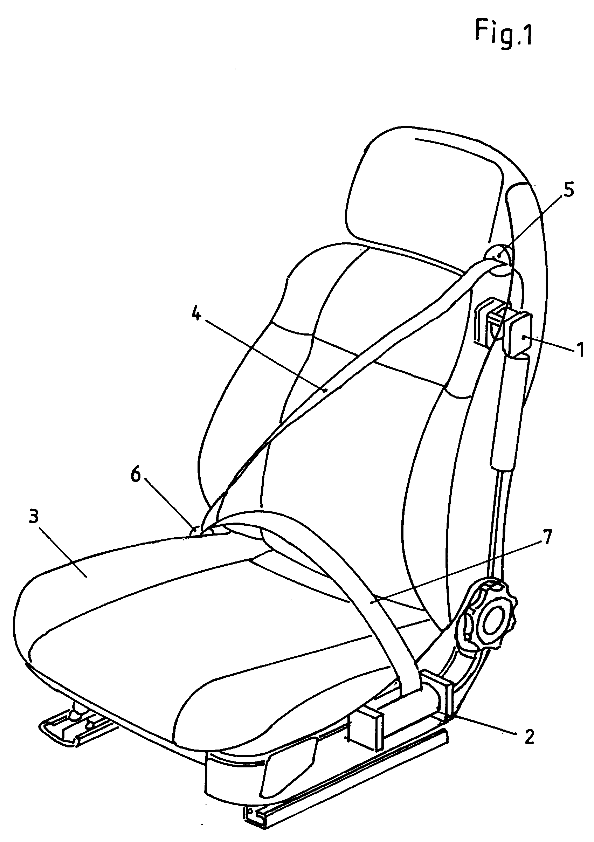

Wie aus Fig. 1 ersichtlich ist, kann ein erfindungsgemäßer Sicherheitsgurt einen Schultergurtautomaten 1 und einen Beckengurtautomaten 2 umfassen, die in dem abgebildeten Ausführungsbeispiel beide an einem Fahrzeugsitz 3 angebracht sind. Von dem Schultergurtautomaten 1 erstreckt sich der Schultergurt 4 des Sicherheitsgurtes beispielsweise über eine obere Umlenkung 5 zu einer Steckzunge 6, die auf bekannte Weise von dem Benutzer in eine entsprechende Aufnahme eingesteckt werden kann. Von der Steckzunge 6 erstreckt sich der Beckengurt 7 des Sicherheitsgurtes zu dem Beckengurtautomaten 2.

Anstelle der Anbringung des Schultergurtautomaten 1 und der oberen Umlenkung 5 an dem Fahrzeugsitz 3 können der Schultergurtautomat 1 und die obere Umlenkung 5 auch an einer B- oder C-Säule des Kraftfahrzeuges angeordnet sein. Weiterhin besteht auch die Möglichkeit, den Beckengurtautomaten 2 an dem Rohbau des Kraftfahrzeuges anzuordnen.

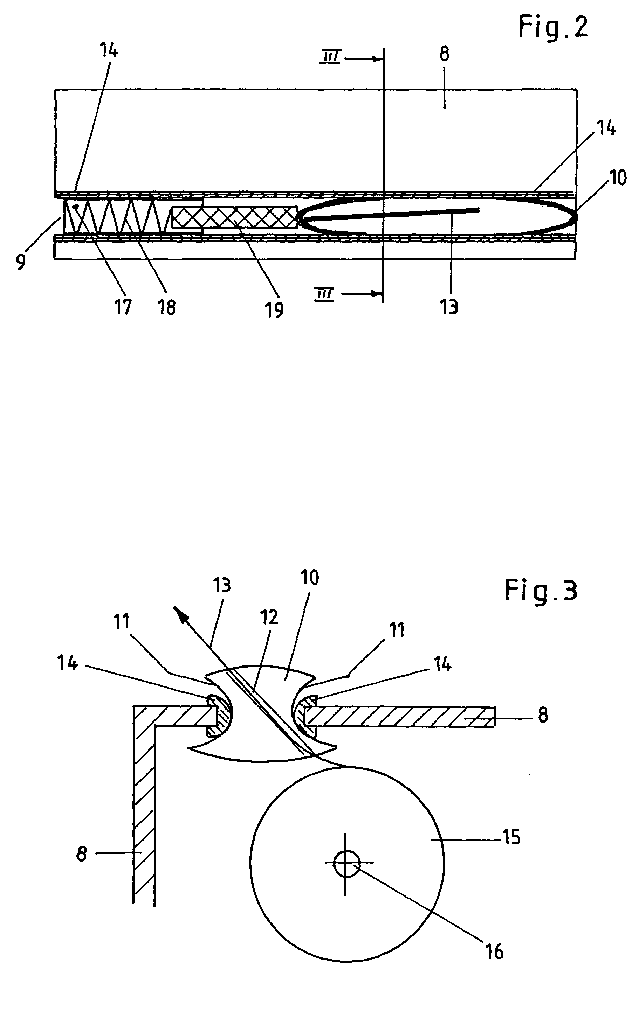

Aus Fig. 2 und Fig. 3 ist der Aufbau des Beckengurtautomaten 2 ersichtlich. Der Beckengurtautomat 2 umfaßt ein Gehäuse 8, das auf seiner Oberseite einen sich in Fahrzeuglängsrichtung erstreckenden Schlitz 9 aufweist. Im Bereich des Schlitzes 9 sind die einander zugewandten Abschnitte der Oberseite des Gehäuses 8 mit sich in Richtung des Schlitzes 9 erstreckenden Führungsschienen 14 versehen, die eine dem Schlitz 9 zugewandte konvexe Außenfläche aufweisen.

Aus Fig. 3 ist ersichtlich, daß in dem Schlitz 9 eine Gurtbandführung 10 eingebracht ist, die sich, wie aus Fig. 2 ersichtlich ist, ein Stück weit längs des Schlitzes 9 erstreckt. Die den Führungsschienen 14 zugewandten Seitenflächen 11 der Gurtbandführung 10 sind konkav ausgeführt, wobei die konkaven Seitenflächen 11 längs der konvexen Außenflächen der Führungsschienen 14 gleiten können.

Die Gurtbandführung 10 weist eine im wesentlichen diagonal durch sie hindurch ragende schlitzförmige Öffnung 12 auf, durch die das Gurtband 13, das den Beckengurt 7 bildet, hindurch geführt ist. Das Gurtband 13 ist im Innern des Gehäuses 8 des Beckengurtautomaten 2 auf eine Aufwickelwelle 15 mit einer Achse 16 aufgewickelt.

Auf der in Fahrzeuglängsrichtung vorderen Seite der Gurtbandführung 10 ist an dieser ein Kolben 19 befestigt, der sich von der Gurtbandführung 10 in Fahrzeuglängsrichtung nach vorne in dem Schlitz 9 in einen ebenfalls in dem Schlitz 9 untergebrachten und an dem Gehäuse 8 geeignet befestigten Führungszylinder 17 erstreckt. In dem Führungszylinder 17 ist eine Druckfeder 18 untergebracht, deren in Fahrtrichtung hintere Seite an der Vorderseite des Kolbens 19 anliegt und einer Bewegung des Kolbens in Fahrtrichtung entgegenwirken kann.

Auf diese Weise wird gewährleistet, daß in einem Crashfall die Gurtbandführung 10 aufgrund der von dem Beckengurt 7 bzw. des durch die Gurtbandführung 10 hindurch ragenden Gurtbandes 13 auf die Gurtbandführung 10 übertragenen in Fahrzeuglängsrichtung nach vorne wirkenden Kräfte sich längs des Schlitzes 9 nach vorne bewegen kann. Es kann vorgesehen sein, daß die Gurtbandführung 10 durch geeignete Befestigungsmittel, wie beispielsweise abscherbare Splinte, derart an dem Gehäuse 8 festgelegt ist, daß sie bei normalem Betrieb des Fahrzeugs nicht in Längsrichtung beweglich ist. Dagegen werden die beispielsweise als Splinte ausgeführten Befestigungsmittel im Crashfall, bei dem die auftretenden Beschleunigungskräfte eine vorgegebene Befestigungskraft übersteigen, beispielsweise durch Abscheren der Splinte gelöst, so daß die Gurtbandführung 10 durch die auftretenden Beschleunigungskräfte in Fahrzeuglängsrichtung nach vorne bewegt werden kann.

### BEZUGSZEICHENLISTE

- 1: ― Schultergurtautomat
- 2: ― Beckengurtautomat
- 3: ― Fahrzeugsitz
- 4: ― Schultergurt
- 5: ― obere Umlenkung
- 6: ― Steckzunge
- 7: ― Beckengurt
- 8: ― Gehäuse von 2
- 9: ― Schlitz in 8
- 10: ― Gurtbandführung
- 11: ― Seitenflächen von 10
- 12: ― schlitzförmige Öffnung in 10
- 13: ― Gurtband
- 14: ― Führungsschiene
- 15: ― Aufwickelwelle
- 16: ― Achse von 15
- 17: ― Führungszylinder
- 18: ― Druckfeder
- 19: ― Kolben

## Patentansprüche

1. Sicherheitsgurt für ein Kraftfahrzeug umfassend einen Beckengurt (7) und einen Beckengurtautomaten (2), in dem der Beckengurt (7) auf eine Aufwickelwelle (15) aufgewickelt werden kann, **dadurch gekennzeichnet,** daß der Sicherheitsgurt eine Gurtbandführung (10) aufweist, die derart zwischen der Aufwickelwelle (15) und dem Beckengurt (7) angeordnet ist, daß sie in einem Crashfall im wesentlichen in Fahrzeuglängsrichtung verschiebbar ist.

2. Sicherheitsgurt nach Anspruch 1, **dadurch gekennzeichnet,** daß der Beckengurtautomat (2) ein Gehäuse (8) umfaßt, an dem die Gurtbandführung (10) angebracht ist.

3. Sicherheitsgurt nach Anspruch 2, **dadurch gekennzeichnet,** daß das Gehäuse (8) auf der dem Beckengurt (7) zugewandten Seite einen im wesentlichen in Fahrzeuglängsrichtung verlaufenden Schlitz (9) aufweist, in dem die Gurtbandführung (10) gehaltert ist.

4. Sicherheitsgurt nach einem der Ansprüche 1 bis 3, **dadurch gekennzeichnet,** daß die Gurtbandführung (10) eine durchgehende schlitzförmige Öffnung (12) aufweist, deren Querschnitt etwa dem des durch sie hindurchgeführten, den Beckengurt (7) bildenden Gurtbandes (13) entspricht.

5. Sicherheitsgurt nach einem der Ansprüche 3 oder 4, **dadurch gekennzeichnet,** daß die der Gurtbandführung (10) zugewandten Seiten des die Gurtbandführung (10) halternden Schlitzes (9) des Gehäuses (8) mit Führungsschienen (14) versehen sind, die mit den ihnen zugewandten Seitenflächen (11) der Gurtbandführung (10) derart zusammenwirken, daß sich eine Längsverschieblichkeit der Gurtbandführung (10) in dem Schlitz (9) ergibt.

6. Sicherheitsgurt nach Anspruch 5, **dadurch gekennzeichnet,** daß die Führungsschienen (14) konvexe Außenflächen aufweisen und daß die diesen zugewandten Seitenflächen (11) der Gurtbandführung (10) entsprechend konkav geformt sind.

7. Sicherheitsgurt nach einem der Ansprüche 1 bis 6, **dadurch gekennzeichnet,** daß der Sicherheitsgurt geeignete Befestigungsmittel umfaßt, die die Bewegung der Gurtbandführung (10) in Fahrzeuglängsrichtung im Normalbetrieb des Kraftfahrzeugs verhindern, wobei diese Befestigungsmittel nur bei im Crashfall auftretenden entsprechend starken Beschleunigungskräften die Gurtbandführung (10) freigeben.

8. Sicherheitsgurt nach einem der Ansprüche 1 bis 7, **dadurch gekennzeichnet,** daß die Bewegung der Gurtbandführung (10) in Fahrzeuglängsrichtung gegen die Kraft eines beispielsweise als Druckfeder (18) ausgeführten Federmittels erfolgt.

9. Sicherheitsgurt nach Anspruch 8, **dadurch gekennzeichnet,** daß an der in Fahrtrichtung des Kraftfahrzeugs vorderen Seite der Gurtbandführung (10) ein Kolben (19) angebracht ist, der zwischen den Führungsschienen (14) verschiebbar ist und auf seiner von der Gurtbandführung (10) abgewandten Seite gegen das beispielsweise als Druckfeder (18) ausgeführte Federmittel drückt.

10. Sicherheitsgurt nach Anspruch 9, **dadurch gekennzeichnet,** daß das Federmittel (Druckfeder 18) in einem in dem Schlitz (9) des Gehäuses (8) festgelegten Führungszylinders (17) untergebracht ist, wobei der Kolben (19) in diesen Führungszylinder (17) hineinbewegbar ist.
